# EUROPEAN PATENT SPECIFICATION

(11) **EP 3 163 804 B1**
(45) Date of publication and mention of the grant of the patent: **31.01.2018**
(21) Application number: 16165490.0
(22) Date of filing: 15.04.2016
(51) Int. Cl.: H04L 12/28, H04L 12/24

(54) **METHOD, APPARATUS AND SYSTEM FOR SETTING THE WORKING MODE OF A DEVICE**
VERFAHREN, VORRICHTUNG UND SYSTEM ZUR EINSTELLUNG DES ARBEITSMODUS EINER VORRICHTUNG
PROCÉDÉ, APPAREIL ET SYSTÈME POUR RÉGLER LE MODE DE FONCTIONNEMENT D'UN DISPOSITIF

(30) Priority: 29.10.2015 CN 201510719239
(43) Date of publication of application: 03.05.2017
(73) Proprietor: Xiaomi Inc., Beijing 100085 (CN)
(72) Inventor: JIA, Weiguang, Beijing 100085 (CN); REN, Tian, Beijing 100085 (CN); HOU, Enxing, Beijing 100085 (CN)
(74) Representative: Delumeau, François Guy

(56) References cited:
- DE-A1-102013 226 390
- US-A1- 2009 231 489
- US-A1- 2012 023 157
- US-A1- 2015 006 638
- US-A1- 2015 195 099

## Description

### FIELD

The present disclosure generally relates to communication technology, and more particularly to method, apparatus and system for setting working mode of a device.

### BACKGROUND

Xiaomi smart home application (simplified as app) is a mobile client software for operations, such as smart access, bindings, control, which is developed by Xiaomi technology. A user logins Xiaomi smart home app by an account, and may access servers using Xiaomi smart equipments (such as smart sockets, air purifiers, light bulbs, etc.). The user may also bind the smart equipments with his own account such that the smart equipments can only receive the control instructions sent by the app of the binding account, thus ensures the privacy property of the smart equipments. In addition to control the smart equipments alone, the user may also set smart scene mode by Xiaomi smart home app to associate a plurality of smart equipments and triggering conditions for multi-device interaction, thereby forming an abundant and effective smart scene.

While using smart equipments, to avoid being disturbed in rest, a user prefers to set the home smart equipments to be in silent mode sometimes for a more quiet and comfortable environment. If there are many home smart equipment, each of them requires the user to set silent mode and turn off the settings by himself.

DE 10 2013 226390 A1 describes a method for controlling a plurality of domestic appliances with the aid of a portable operating apparatus. The portable operating apparatus is used to receive operating input from a user, and in response transmits a control signal to the associated domestic appliances so as to switch the operating mode of the domestic appliances between an at-home mode and a not-at-home mode. The operating mode of the portable operating apparatus itself is not changed, and the portable operating apparatus only serves as a controlling apparatus to direct the associated domestic appliances to switch between the at-home mode and the not-at-home mode.

US 2012/023157 A1 describes user profile based configuration of user experience environment, in which user profiles regarding user experience environment are synchronized among a plurality of devices through a computer network. US 2015/195099 A1 describes an intelligent remote sensor enabled apparatus for coordinating environments configured to initiate a communication of setting information to an environment coordinator to alter operating condition of network connected devices.

### SUMMARY

The present invention is defined in the appended independent claims to which reference should be made. Advantageous features are set out in the appended dependent claims. It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the disclosure.
FIG. 1 is a flow chart for a method for setting working mode of a device according to an exemplary embodiment.
FIG. 2 is a flow chart for a method for setting working mode of a device according to an exemplary embodiment.
FIG. 3 is a flow chart for a method for setting working mode of a device according to an exemplary embodiment.
FIG. 4 is a flow chart for a method for setting working mode of a device according to an exemplary embodiment.
FIG. 5 is a flow chart for a method for setting working mode of a device according to an exemplary embodiment.
FIG. 6 is a block diagram for a method for setting working mode of a device according to an exemplary embodiment.
FIG. 7 is a block diagram for an apparatus for setting working mode of a device according to an exemplary embodiment.
FIG. 8 is a block diagram for an apparatus for setting working mode of a device according to an exemplary embodiment.
FIG. 9 is a block diagram for an apparatus for setting working mode of a device according to an exemplary embodiment.
FIG. 10 is a block diagram for an apparatus for setting working mode of a device according to an exemplary embodiment.
FIG. 11 is a block diagram for an apparatus for setting working mode of a device according to an exemplary embodiment.
FIG. 12 is a block diagram for the entity of an apparatus for setting working mode of a device according to an exemplary embodiment.
FIG. 13 is a block diagram for the entity of an apparatus for setting working mode of a device according to an exemplary embodiment.
FIG. 14 is a block diagram for a first device according to an exemplary embodiment.
FIG. 15 is a block diagram for a server according to an exemplary embodiment.
FIG. 16 is a block diagram for a system for setting working mode of a device according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the disclosure. Instead, they are merely examples of device and methods consistent with aspects related to the disclosure as recited in the appended claims.

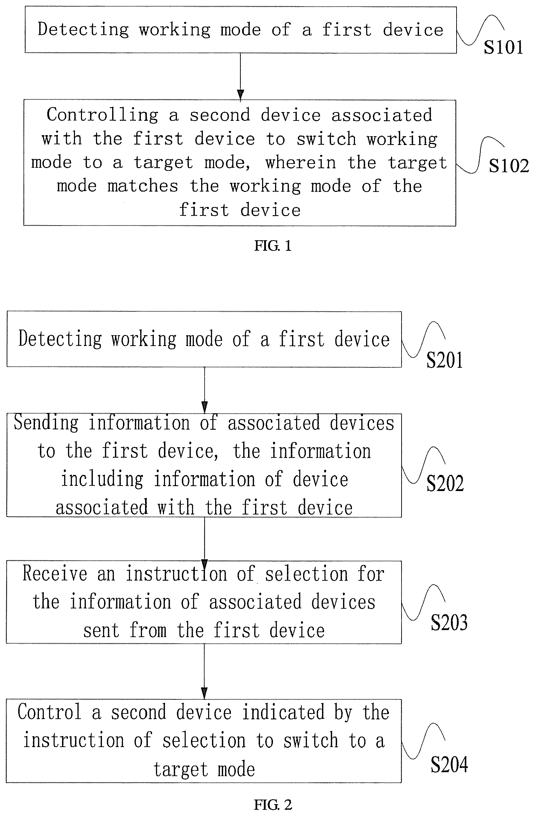

FIG. 1 is a flow chart for a method for setting working mode of a device according to an exemplary embodiment. As shown in FIG. 1, the method for setting working mode of a device is used in a server, wherein the method includes the following steps.

In step S101, detect working mode of a first device.

The server may detect working mode of a first device actively, or the first device may report its working mode actively. For example, if the working mode of the first device changes, the first device report its working mode to the server so that the server can detect the working mode of the first device. In one embodiment, the server sends request for detection to the first device periodically. After receiving the request sent by the server, the first device returns to the server a response for the detection carrying the working mode of the first device so that the server can detect the working mode of the first device. Wherein, the working mode of the first device includes silent mode, vibration mode and beep mode, etc.

In step S102, control a second device associated with the first device to switch a working mode of said second device to a target mode, wherein said target mode matches the working mode of the first device.

The first device may be smart phone, tablet or the like. Correspondingly, the second device may be s smart home equipment, such as smart sockets, air purifiers, light bulbs, refrigerators etc. the second device may access the server via a client installed thereon. For example, Xiaomi smart home app is a mobile client software for operations, such as smart access, bindings, control, and login the app using an account of Xiaomi, a user may access the server by the Xiaomi smart equipment. In addition to control the smart equipments alone by using the app, the user may also set smart scene mode via the app to associate a plurality of smart equipments and triggering conditions for multi-device interaction. The method in the embodiment mains applies to smart scene mode to associate a plurality of smart equipments with the mobile terminal.

In the embodiment, after detecting the working mode of the first device, the server controls the second device associated with the first device to switch the working mode to the target mode. The association between the first device and the second device may be previously stored in the server, or may be required by the server from the first device when needed.

Wherein, the target mode matching the working mode of the first device includes: the target mode is the same as the working mode of the first device, that is, after detecting the working mode of the first device, the server switches the working mode of the second device to be the same as the working mode of the first device, i.e., the first device and the second device are both silent mode or the like. Of course, the working mode of the second device may be different from that of the first device. For example, if the working mode of the first device is silent mode, switch the working mode of the second device to vibration mode; or if the working mode of the first device is silent mode, switch the working mode of the second device to small-volume mode, wherein the small-volume mode refers that the volume of the second device is very small in order not to disturb the rest of the user or other persons. In the method of the embodiment, the user only needs to set the working mode of the first device by manual, the server may automatically control the second device associated with the first device to switch working mode of said second device to a target mode according to the working mode of the first device, which avoids that the user needs to set the working mode of each second device in turn by manual. It is facilitated for the user to set the working mode of a device, which provides a better user experience.

In a common scenario, when a user is in rest or in work, he needs to switch the smart equipments at home, such as cell phone, smart sockets, air purifiers, light bulbs, refrigerators, to silent mode to avoid being disturbed by the equipments. In the method of the disclosure, the user needs to set the mode of the cell phone to silent mode, and after detecting the working mode of the cell phone is switched to silent mode, the server controls the working mode of the smart sockets, air purifiers, light bulbs, refrigerators associated with the cell phone to switch to silent mode.

In the method provided in the embodiment, by detecting the working mode of the first device, the server controls the second device associated with the first device to switch the working mode of said second device to a target mode, wherein the target mode matches the working mode of the first device. In the method, a user only needs to set working mode of a first device, and the server may automatically control a second device associated with the first device to switch working mode of said second device to a target mode according to the working mode of the first device, and thus working mode of a device may be set more conveniently and efficiently.

FIG. 2 is a flow chart for a method for setting working mode of a device according to an exemplary embodiment. On the basis of the embodiment as shown in FIG. 1, the embodiment further describes how to control a device to switch working mode to a target mode. As shown in FIG. 2, the method for setting working mode of a device includes the following steps.

In step S201, detect working mode of the first device.

In step S202, send information of associated device to the first device, wherein the information of associated device includes the device information associated with the first device.

Wherein, the information of associated device may include information of devices which are associated with the first device, wherein current working mode of these devices do not match the current working mode of the first device. The devices associated with the first device may be previously stored in the server, and the server can not only detect the working mode of the first device, but also can detect the working modes of the devices associated with the first device. So the server may determine the working modes of which devices are the same as that of the first device, and working modes of which devices are not. And the server sends the information of associated devices to those devices that are associated with the first device and the working modes of which do not match the current working mode of the first device.

In step S203, receive an instruction of selection sent by the first device for the information of associated device.

After receiving the information of associated device sent by the server, the first device chooses the working mode of which devices to switch from the devices associated with the first device. In an alternative embodiment, the first device displays the information of the devices associated with the first device sent by the server in a list to the user, and the user select the second device to switch according to his needs. The user may select all the devices associated with the first device to switch, or may select some of them to switch. Several options may be listed in the information of associated devices. An instruction of selection will be generated when at least one of the options is selected. The selection instruction indicating that one or more selected devices, including the second device, among the one or more devices that are associated with the first device are selected. The first device sends the instruction of selection to the server, with the instruction instructing the second device to switch.

In step S204, control a second device indicated in the instruction of selection to switch the working mode to the target mode.

After receiving the instruction of selection, the server controls the second device indicated in the instruction of selection to switch the working mode of said second device to a target mode. The server may send an instruction for switching the working mode to the second device, with the instruction for switching the working mode including the target mode. After receiving the instruction for switching the working mode, the second device switches the working mode to the target mode included in the instruction for switching the working mode.

For example, after detecting working mode of the cell phone is silent mode, the server sends the information of associated smart equipments, such as smart sockets, air purifiers, light bulbs, refrigerators or the like, to the cell phone. The user may choose which associated devices to switch by the cell phone. The cell phone sends the instruction of selection to the server for the information of associated devices, and according to the instruction of selection, the server controls the associated devices indicated in the instruction of selection to switch the working mode to silent mode. Assume that the user only selects the working mode of the smart sockets and the air purifiers to switch, then the server only switch the working mode of the smart sockets and the air purifiers to silent mode.

In the method for setting working mode of a device, the server detects the working mode of the first device, and sends the information of associated devices to the first device, wherein the information of associated devices includes the device information associated with the first device. The server receives the instruction of selection sent by the first device for the information of associated devices, and controls the second device indicated in the instruction of selection to switch the working mode to the target mode. In the method, by sending the information of associated devices to the first device by the server, a user may select the working mode of which second devices to switch according to his needs. The way to switch is more flexibly and convenient, and the user experience is further improved.

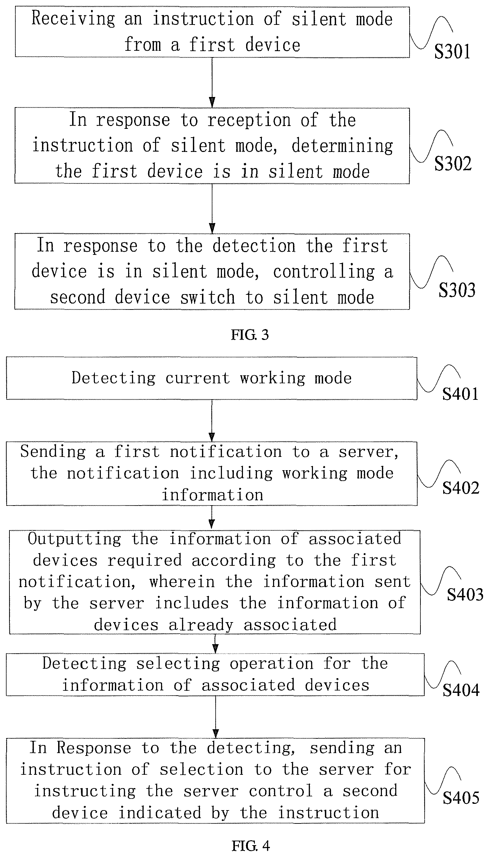

FIG. 3 is a flow chart for a method for setting working mode of a device according to an exemplary embodiment. On the basis of the embodiment as shown in FIG. 1, the embodiment describes how to control a device to switch working mode to silent mode. As shown in FIG. 3, the method for setting working mode of a device includes the following steps.

In step S301, receive an instruction of silent mode sent by the first device.

In the embodiment, after being set silent mode, the first device sends the instruction of silent mode to the server actively to inform the server that its working mode is silent mode.

In step S302, determine that the first device is silent mode in response to a reception the instruction of silent mode.

After receiving the instruction of silent mode, the server determines that the first device is in silent mode.

In step S303, switch the second device to silent mode in response to determining that the first device is in silent mode.

In an alternative embodiment, control the second device to switch the working mode of the second device to silent mode by the method of Steps S202-204 in the second embodiment, which is not elaborated herein. In an alternative embodiment, after determining that the first device is in silent mode, the server considers all the devices associated with the first device as the second device, not needing the user to choose. After that, the server control the second devices to switch to silent mode, such that the on/off of silent mode of the second device is consistent with that of the first device, i.e. after the first device turns on silent mode, the second device turns on silent mode, and after the first device turns off silent mode, the second device turns off silent mode.

In the method for setting working mode of a device in the embodiments, by receiving an instruction of silent mode sent by the first device, the server determines that the first device is in silent mode in response to the instruction of silent mode, and controls the second device associated with the first device to switch the working mode to silent mode. In the method, the user only needs to set the working mode of the first device to be silent mode, the server will automatically control the second device associated with the first device to switch the working mode to silent mode according to the working mode of the first device, and thus working mode of a device may be set more conveniently and efficiently.

FIG. 4 is a flow chart for a method for setting working mode of a device according to an exemplary embodiment, and the method for setting smart equipments to be silent is used in a first device. As shown in FIG. 4, the method for setting working mode of a device includes the following steps.

In step S401, detect the current working mode.

The first device detects its current working mode. The first device may be smart phone, tablet or the like. Take phone for example, the working mode of the phone includes silent mode, vibration mode and beep mode, etc. In silent mode, if the phone receives a call or a message, it cannot notify the user in voice, and the user cannot hear ring for the call or the message.

In step S402, send a first notification to the server, wherein the first notification includes working mode information.

After detecting the working mode, the first device sends a first notification to the server to report its working mode to the server.

In step S403, output the information of associated device acquired by the first notification and sent by the server, wherein the information of associated device includes the information of the device already being associated with the device;
After receiving the first notification sent by the first device, the server acquires the information of the device already being associated with the first device according to the first notification, and sends the information of the device to the first device, wherein the information of the device may include information of devices which are associated with the first device, wherein current working modes of these devices do not match the current working mode of the first device. After receiving the first notification, the first device outputs the information of associated device, and the first device may display the information of the devices already associated in a list to the user to choose. In one embodiment, the first notification includes the user identification, which is used for the server to determine the devices associated with the first device. The user may choose which devices to be associated with the user identification, and set the association between the devices and the user identifications previously in the server. A user identification corresponds to a plurality of devices. The user identification may be the account used when the smart equipments login in Xiaomi smart home app. A user generally uses the same account to access the server by all the smart equipments at home. The user identification may also be other identifiers of course. After receiving the first notification, the server determines which devices are associated with the first device according to the user identification.

In step S404, detect the choosing operation for the information of associated devices.

After the first device outputting the information of associated devices, the user selects the associated devices required to switch working mode from the devices already associated with the first device. The first device will detect the choosing operation by the user for the information of associated devices.

In step S405, in response to detecting the choosing operation, send an instruction of selection to the server, which is used to instruct the server to control a second device indicated in the instruction of selection to switch the working mode of said second device to a target mode.

After detecting the choosing operation by the user for the information of associated devices, the first device sends an instruction of selection to the server. After receiving the instruction, the server controls the second device to switch the working mode of said second device to a target mode.

In one embodiment, after detecting the current working mode is silent mode, if the first device includes a speaker, it may also notify the user in voice that the first device turns on silent mode such that the user may get to know the working mode of the first device in time.

For example, after detecting the current working mode is silent mode, the cell phone sends a first notification to a server, wherein the first notification carries the working mode of the cell phone. The cell phone receives the information of associated devices returned by the server according to the first notification, wherein the information of associated devices includes the information of the equipments associated with the cell phone, such as smart sockets, air purifiers, light bulbs, refrigerators or the like, to the cell phone. The cell phone outputs the information of associated devices to the user, and the user selects the devices the working modes of which are to switch from smart sockets, air purifiers, light bulbs, refrigerators or the like. After choosing by the user, the cell phone detects the choosing operation for the information of associated devices, and sends the choosing operation to the server, wherein the choosing operation is used to instruct the server to control a second device indicated in the instruction of selection to switch working mode to silent mode.

In the method for setting working mode of a device in the embodiment, the first device detects the current working mode, and sends a first notification to a server, wherein the first notification includes the working mode information; output the information of associated device acquired by the first notification and sent by the server, wherein the information of associated device includes the information of the device already being associated with the device; detect a selecting operation for the information of associated device; and in response to detecting the selecting operation, send an instruction of selection to the server, wherein the instruction of selection is used to instruct the server to control a second device indicated in the instruction of selection to switch the working mode to the target mode. In the method, the user only needs to set working mode of the first device, and the first device reports the working mode to a server, which automatically controls a second device associated with the first device to switch working mode of said second device to a target mode according to the working mode of the first device, and thus working mode of a device may be set more conveniently and efficiently.

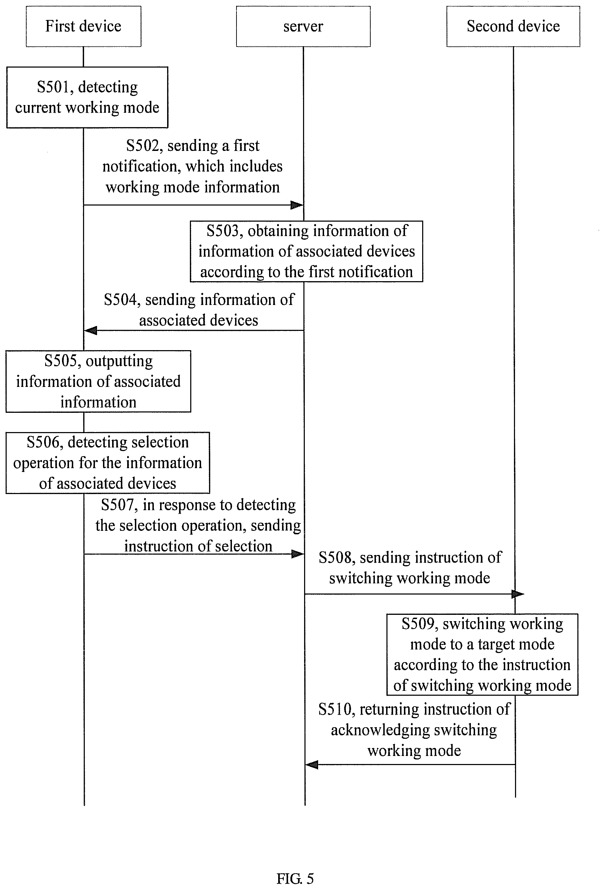

FIG. 5 is a flow chart for a method for setting working mode of a device according to an exemplary embodiment. As shown in FIG. 5, the method for setting working mode of a device includes the following steps.

In step S501, the first device detects the current working mode.

In step S502, the first device sends a first notification to a server, wherein the first notification includes the working mode information.

In step S503, the server acquires the information of associated devices according to the first notification.

The information of associated devices includes: information of devices which are associated with the first device, wherein current working modes of these devices do not match the current working mode of the first device.

In step S504, the server sends the information of associated devices to the first device.

In step S505, the first device outputs the information of associated devices.

In step S506, the first device detects the choosing operation for the information of associated device.

In step S507, the first device sends an instruction of selection to the server in response to detecting the choosing operation.

The instruction of selection is used to instruct the server to control a second device to switch working mode of said second device to a target mode.

In step S508, the server sends an instruction of switching working mode to the second device according to the instruction of selection.

The instruction of switching working mode includes the target mode.

In step S509, the second device switch working mode to the target mode according to the instruction of switching working mode.

In step S510, the second device returns an instruction of acknowledging switching working mode to the server.

After switching working mode to the target mode, the second device returns the instruction of acknowledging switching working mode to the server to acknowledge the target mode is already switched.

For example, after setting the working mode of the cell phone to be silent mode, the server sets the working mode of the equipments associated with the cell phone, such as smart sockets, air purifiers, light bulbs, refrigerators etc., to be silent mode. After setting the working mode to be silent mode according to the instructions by the server, smart sockets, air purifiers, light bulbs, refrigerators return instructions of acknowledging switching to the server respectively. After receiving the instructions of acknowledging switching, the server determines that all the devices have already switched the working mode to silent mode.

In the method for setting working mode of a device in the embodiment, the user only needs to set the working mode of the first device, and reports the working mode to the server, which automatically controls a second device associated with the first device to switch working mode to a target mode according to the working mode of the first device, and thus working mode of a device may be set more conveniently and efficiently.

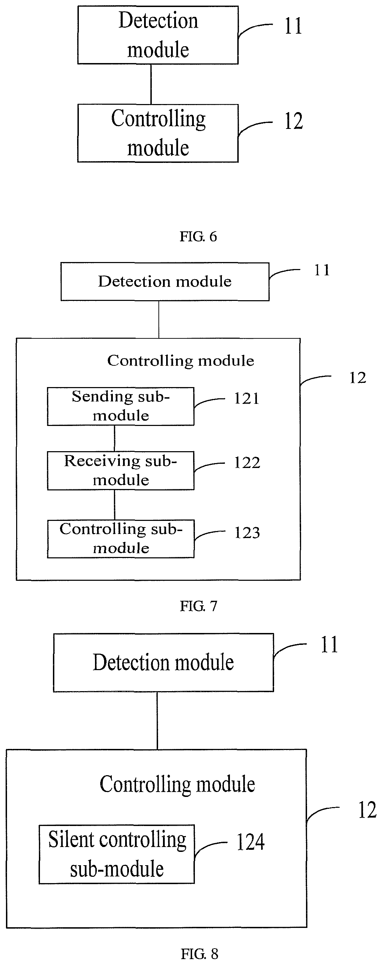

FIG. 6 is a block diagram for an apparatus for setting working mode of a device according to an exemplary embodiment. As shown in FIG. 6, the apparatus for setting working mode includes a detection module 11 and a controlling module 12.

The detection module 11, is configured to detect the working mode of a first device;

The controlling module 12, is configured to control a second device associated with the first device to switch the working mode to a target mode, wherein the target mode matches the working mode of the first device detected by the detection module 11.

In one embodiment, the target mode is the same as the working mode of the first device.

FIG. 7 is a block diagram for an apparatus for setting working mode of a device according to an exemplary embodiment. On the basis of the apparatus for setting working mode of a device as shown in FIG. 6, as shown in FIG. 7, the controlling module 12 includes a sending sub-module 121, a receiving sub-module 122 and a controlling sub-module 123.

Wherein, the sending sub-module 121 is configured to send information of associated device to the first device, wherein the information of associated device includes the device information associated with the first device;
the receiving sub-module 122, is configured to receive an instruction of selection sent by the first device for the information of associated device;
the controlling sub-module 123, is configured to control a second device indicated in the instruction of selection to switch the working mode to the target mode.

In one embodiment, the information of associated devices includes information of devices which are associated with the first device, wherein current working modes of these devices do not match the current working mode of the first device.

FIG. 8 is a block diagram for an apparatus for setting working mode of a device according to an exemplary embodiment. On the basis of the apparatus for setting working mode of a device as shown in FIG. 6, as shown in FIG. 8, the controlling module 12 includes a silent controlling sub-module 124.

The silent controlling sub-module 124, is configured to control the second device to switch to silent mode in response to detecting the first device is in silent mode by the detection module.

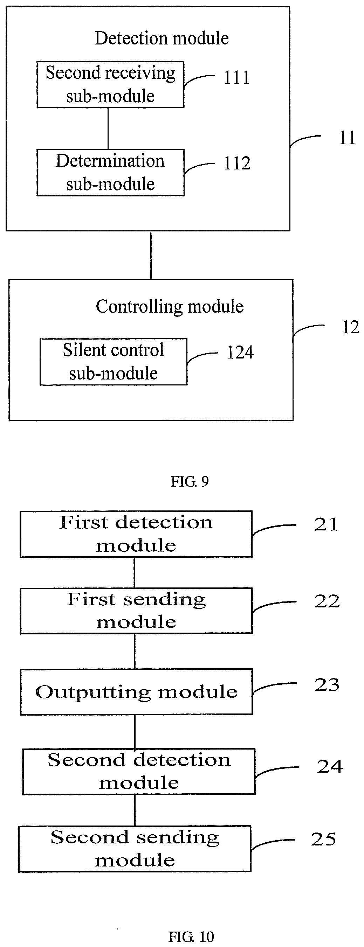

FIG. 9 is a block diagram for an apparatus for setting working mode of a device according to an exemplary embodiment. On the basis of the apparatus for setting working mode of a device as shown in FIG. 8, as shown in FIG. 9, the detection module 11 includes a second receiving sub-module 111 and determining sub-module 112.

The second receiving sub-module 111, is configured to receive the instruction of silent mode sent by a first device;
the determining sub-module 112, is configured to determine that the first device is in silent mode in response to the second receiving sub-module 111 receiving the instruction of silent mode.

FIG. 10 is a block diagram for an apparatus for setting working mode of a device according to an exemplary embodiment, and the apparatus for setting working mode of a device is used in a first device. As shown in FIG. 10, the apparatus for setting working mode of a device includes a first detection module 21, a first sending module 22, outputting module 23, a second detection module 24 and a second sending module 25.

The first detection module 21, is configured to detect the current working mode;
the first sending module 22, is configured to send a first notification to a server, wherein the first notification includes the working mode information;
the outputting module 23, is configured to output the information of associated device acquired by the first notification and sent by the server, wherein the information of associated device includes the information of the device already being associated with the device;
the second detection module 24, is configured to detect a selecting operation for the information of associated device; and
the second sending module 25, is configured to send an instruction of selection to the server in response to detecting the selecting operation by the second detection module 24, wherein the instruction of selection is used to instruct the server to control a second device indicated in the instruction of selection to switch the working mode to the target mode.

In one embodiment, the information of associated devices includes information of devices which are associated with the first device, wherein current working modes of these devices do not match the current working mode of the first device.

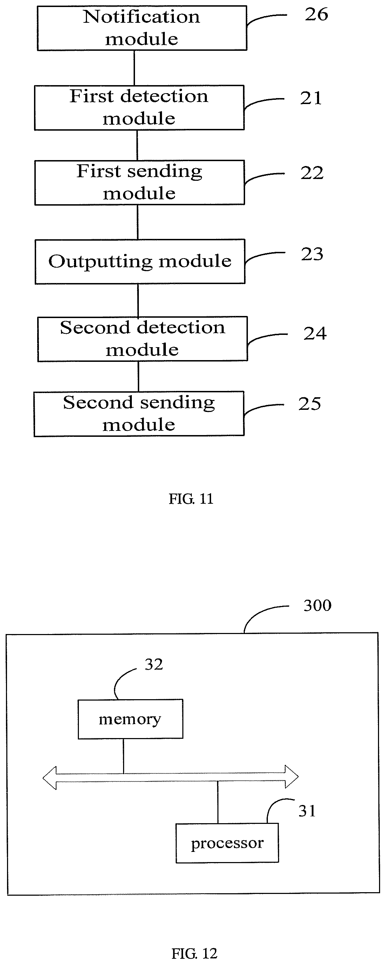

FIG. 11 is a block diagram for an apparatus for setting working mode of a device according to an exemplary embodiment. On the basis of the apparatus for setting working mode of a device as shown in FIG. 10, as shown in FIG. 11, the apparatus for setting working mode of a device may further includes a notifying module 26.

The notifying module 26, is configured to notify the user in voice that the first device turns on silent mode after detecting the current working mode is silent mode by the first detection module.

With respect to the apparatuses in the above embodiments, the specific manners that the respective modules perform operations have been described in detail in the embodiments regarding the relevant methods, and will not be elaborated herein.

FIG. 12 is a block diagram for the entity of an apparatus for setting working mode of a device according to an exemplary embodiment, and the apparatus for setting working mode of a device applies to a server. As shown in FIG. 12, the apparatus 300 for setting working mode of a device includes: a processor 31; a memory 32, used to store the processor-executable instructions, wherein the memory 32 is communicatively coupled to the processor 31 via a system bus.
wherein, the processor is configured to:
detect working mode of a first device; and
control a second device associated with the first device to switch the working mode to a target mode, wherein the target mode matches the working mode of the first device.

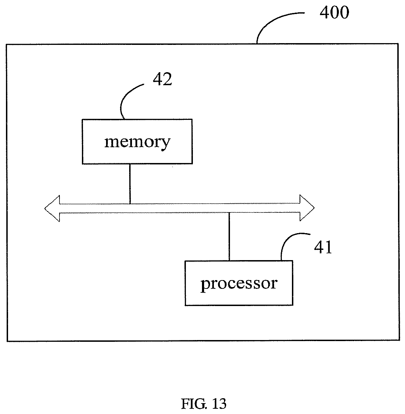

FIG. 13 is a block diagram for the entity of an apparatus for setting working mode of a device according to an exemplary embodiment, and the apparatus for setting working mode of a device applies to a first device. As shown in FIG. 13, the apparatus 400 for setting working mode of a device includes: a processor 41; a memory 42, used to store the processor-executable instructions, wherein the memory 42 is communicatively coupled to the processor 41 via a system bus.
wherein, the processor is configured to:
detect the current working mode;
send a first notification to a server, wherein the first notification includes the working mode information;
output the information of associated device acquired by the first notification and sent by the server, wherein the information of associated device includes the information of the device already being associated with the device;
detect a selecting operation for the information of associated device; and
in response to detecting the selecting operation, send an instruction of selection to the server, wherein the instruction of selection is used to instruct the server to control a second device indicated in the instruction of selection to switch the working mode to the target mode.

In the above embodiments of entities of apparatuses for setting working mode of a device, it should be appreciated that the processor may be Central Processing Unit (simplified as CPU), or other general-purpose processors, Digital Signal Processing (simplified as DSP), Application Specific Integrated Circuit (simplified as ASIC) or the like. The general-purpose processor may be microprocessor or the processor may be other common processor, etc. The above memory may be read-only memory (simplified as ROM), random access memory (simplified as RAM), flash memory, hard disk or solid-mode disk. The steps of method disclosed in conjunction with the embodiments of the disclosure may be embodied to be performed by hardware processors, or be performed by the combination of the hardware and software module in the processor.

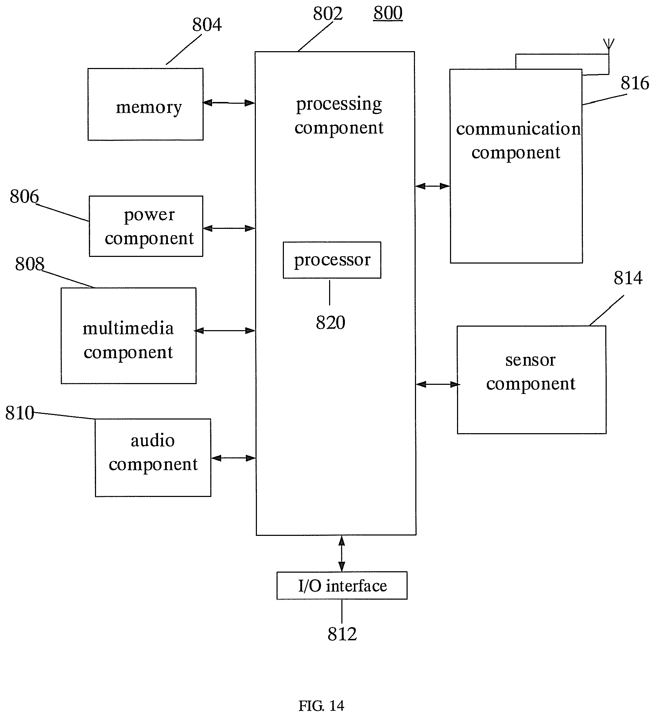

Fig. 14 is a block diagram illustrating a first device according to an exemplary embodiment. For example, the device 800 may be a mobile phone, a computer, a digital broadcast terminal, a messaging device, a gaming console, a tablet, a medical device, an exercise equipment, a personal digital assistant, and the like.

Referring to Fig. 14, the device 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the device 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the device 800. Examples of such data include instructions for any applications or methods operated on the device 800, contact data, phonebook data, messages, pictures, video, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the device 800. The power component 806 may include a power management system, one or more power sources, and any other components associated with the generation, management, and distribution of power for the device 800.

The multimedia component 808 includes a screen providing an output interface between the device 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and the rear camera may receive an external multimedia datum while the device 800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the device 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the device 800. For instance, the sensor component 814 may detect an open/closed status of the device 800, relative positioning of components (e.g., the display and the keypad, of the device 800), a switch in position of the device 800 or a component of the device 800, a presence or absence of user contact with the device 800, an orientation or an acceleration/deceleration of the device 800, and a switch in temperature of the device 800. The sensor component 814 may include a proximity sensor configured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly, between the device 800 and other devices. The device 800 can access a wireless network based on a communication standard, such as WiFi, 2G, or 3G, or a combination thereof. In an exemplary embodiment, the communication component 816 receives a broadcast signal or broadcast associated information from an external broadcast management system via a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the device 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium having stored thereon instructions that, when executed by a processor of a mobile terminal, cause a first device to perform a method for setting working mode of a device, the method for setting working mode of a device including:
detecting the current working mode;
sending a first notification to a server, wherein the first notification includes the working mode information;
outputting information of associated devices acquired according to the first notification and sent by the server, wherein the information of associated devices includes the information of the devices already associated;
detecting a selecting operation for the information of associated devices; and
in response to detecting the selecting operation, sending an instruction of selection to the server, wherein the instruction of selection is used to instruct the server to control a second device indicated in the instruction of selection to switch the working mode to the target mode.

In one embodiment, the information of associated devices includes information of devices which are associated with the first device, wherein current working modes of these devices do not match the current working mode of the first device.

In one embodiment, the method for setting working mode of a device further includes:
after detecting the current working mode is silent mode, notifying the user in voice that the first device turns on silent mode.

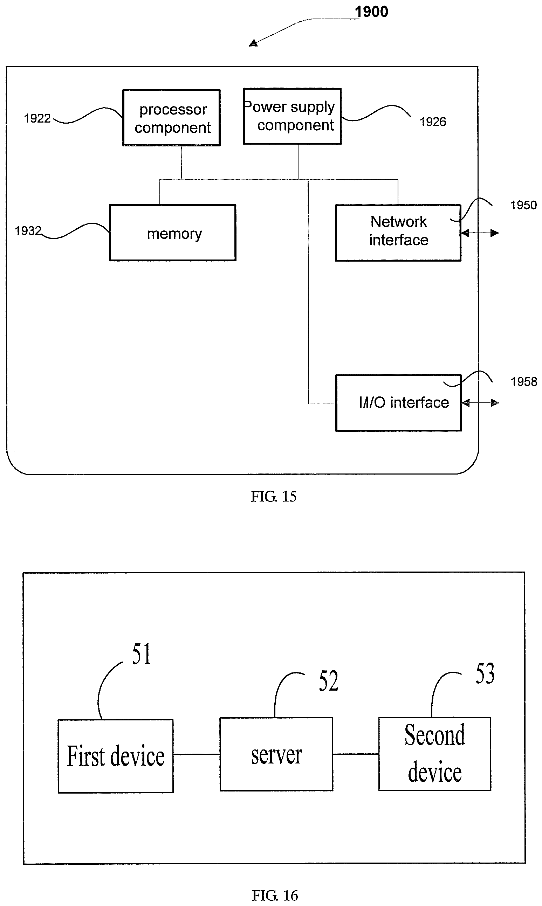

FIG. 15 is a block diagram of a server, according to an exemplary embodiment. For example, the device 1900 may be a server. Referring to FIG. 15, the server 1900 may include: a processing component 1922, which further includes one or more processors; and memory resources presented by a memory 1932, which is used to store instructions (e.g. application programs) executable by the processor component 1922. The application programs stored in the memory 1932 may include one or more modules (not shown) corresponding to a set of instructions. Further, the processing component 1922 may be configured to execute the instructions to perform the methods of setting working mode of a device as shown in FIG.s 1-3.

The device 1900 may also include: a power supply 1926, used to provides power to server 1900; a wired or wireless network interfaces 1950, configured to enable the server 1900 connected to the network, an input/output interfaces 1958, and/or an operating systems 1941, such as Windows Server™, Mac OS X™, Unix™, Linux™, FreeBSD™, or the like.

FIG. 16 is a block diagram for a system for setting working mode of a device according to an exemplary embodiment. As shown in FIG. 16, the system for setting working mode of a device includes: a first device 51, a server 52 and at least a second device 53.
the server 52 is configured to:
detect working mode of a first device; and
control the second device 53 associated with the first device 51 to switch the working mode to a target mode, wherein the target mode matches the working mode of the first device.

In one embodiment, the first device 51 is configured to:
detect the current working mode;
send a first notification to the server 52, wherein the first notification includes the working mode information;
output information of associated devices acquired according to the first notification and sent by the server 52, wherein the information of associated devices includes the information of the device already being associated with the device;
detect a selecting operation for the information of associated devices;
in response to detecting the selecting operation, send an instruction of selection to the server 52, wherein the instruction of selection is used to instruct the server to control a second device 53 indicated in the instruction of selection to switch working mode to the target mode; and
the server 52 is configured to:
   send information of associated devices to the first device 51;
   receive an instruction of selection sent by the first device 51; and
   control the second device 53 indicated in the instruction of selection to switch working mode to the target mode.

Other embodiments of the disclosure will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with a true scope of the disclosure being indicated in the following claims.
It will be appreciated that the inventive concept is not limited to the exact construction that has been described above and illustrated in the accompanying drawings, and that various modifications and variations can be made without departing from the scope thereof. It is intended that the scope of the disclosure only be limited by the appended claims.

## Claims

1. A method for setting a working mode of a device, said method comprising:
a step of receiving (S101) working mode information from a first device, wherein the working mode information indicates a working mode of the first device in which the first device is currently operating; and
a step of controlling (S102) a second device associated with the first device to switch a working mode of said second device to a target mode, wherein said target mode matches the working mode of the first device, wherein the step (S102) of controlling a second device associated with the first device to switch a working mode of the second device to a target mode comprises:
sending (S202), to the first device, information of associated devices comprising information of devices associated with the first device;
receiving (S203) an instruction of selection sent by the first device, which is based on a selection from the information of associated devices; and
controlling (S204) the second device indicated in the instruction of selection to switch a working mode of said second device to the target mode,
wherein the information of associated devices includes information of devices which are associated with the first device, wherein current working modes of these devices do not match the current working mode of the first device.

2. The method of claim 1, wherein the step (S102) of controlling a second device associated with the first device to switch the working mode of the second device to a target mode comprises:
in response to detecting that the first device is in silent mode, controlling (S303) the second device to switch the working mode of the second device to silent mode.

3. The method of claim 2, wherein the step (S101) of receiving working mode information from the first device comprises:
receiving (S301) an instruction of silent mode sent by the first device; and
in response to a reception the instruction of silent mode, determining (S302) that the first device is in silent mode.

4. The method of any one of claims 1 to 3, wherein said target mode of said second device is the same as the working mode of the first device.

5. An apparatus for setting a working mode of a device, said apparatus comprising:
a detection module (11), configured to receive working mode information from a first device, wherein the working mode information indicates a working mode of the first device in which the first device is currently operating; and
a controlling module (12), configured to control a second device associated with the first device to switch a working mode of said second device to a target mode, wherein the target mode of said second device matches the working mode of the first device indicated in the received working mode information, wherein the controlling module comprising:
a sending sub-module (121), configured to send, to the first device, information of associated devices comprises information of devices associated with the first device;
a receiving sub-module (122), configured to receive an instruction of selection sent by the first device, which is based on a selection from the information of associated devices
a controlling sub-module (123), configured to control a second device indicated in the instruction of selection to switch a working mode of said second device to the target mode,
wherein the information of associated devices includes information of devices which are associated with the first device, wherein current working modes of these devices do not match the current working mode of the first device.

6. The apparatus of claim 5, wherein the controlling module comprises:
a silent controlling sub-module (124), configured to control the second device to switch the working mode of the second device to silent mode in response to the first device being in silent mode as indicated in the received working mode information.

7. The apparatus of claim 6, wherein the detection module comprising:
a second receiving sub-module (111), configured to receive an instruction of silent mode sent by the first device;
a determining sub-module (112), configured to determine that the first device is in silent mode in response to the second receiving sub-module receiving the instruction of silent mode.

8. The apparatus of any one of claims 5 to 7, wherein said target mode of said second device is the same as the working mode of the first device.

9. A system for setting a working mode of a second device, the system comprising:
the apparatus according to claim 5, a first device (51), and a plurality of devices comprising at least the second device (53).

10. The system of claim 9, wherein
the first device is configured to:
detect current working mode;
send a first notification to the apparatus, wherein the first notification comprises the working mode information;
output information of associated devices acquired according to the first notification and sent by the apparatus, wherein the information of associated devices comprises the information of the device already being associated with the device;
detect a selecting operation for the information of associated devices; and
in response to detecting the selecting operation, send an instruction of selection to the apparatus, wherein the instruction of selection is used to instruct the apparatus to control the second device indicated in the instruction of selection to switch working mode to the target mode.

11. A computer program comprising instructions which, when the program is executed by a computer, cause the computer to carry out all the steps of the method according to any of claims 1 to 4.

## Patentansprüche

1. Verfahren zur Einstellung eines Arbeitsmodus einer Vorrichtung, wobei das Verfahren umfasst:
einen Schritt des Empfangens (S101) von Arbeitsmodusinformationen von einer ersten Vorrichtung, wobei die Arbeitsmodusinformationen einen Arbeitsmodus der ersten Vorrichtung anzeigen, in dem die erste Vorrichtung gegenwärtig arbeitet, und
einen Schritt des Steuerns (S102) einer zweiten Vorrichtung in Verbindung mit der ersten Vorrichtung, um einen Arbeitsmodus der zweiten Vorrichtung auf einen Zielmodus umzuschalten, wobei der Zielmodus dem Arbeitsmodus der ersten Vorrichtung entspricht, wobei der Schritt (S102) des Steuerns einer zweiten Vorrichtung in Verbindung mit der ersten Vorrichtung, um einen Arbeitsmodus der zweiten Vorrichtung auf einen Zielmodus umzuschalten, umfasst:
Senden (S202), an die erste Vorrichtung, von Informationen über verbundene Vorrichtungen, die Informationen über Vorrichtungen in Verbindung mit der ersten Vorrichtung umfassen,
Empfangen (S203) einer Auswahlanweisung, die von der ersten Vorrichtung gesendet wird, die auf einer Auswahl aus den Informationen verbundener Vorrichtungen basiert, und
Steuern (S204) der zweiten Vorrichtung, die in der Auswahlanweisung angegeben ist, um einen Arbeitsmodus der zweiten Vorrichtung auf den Zielmodus umzuschalten,
wobei die Informationen über verbundene Vorrichtungen Informationen über Vorrichtungen beinhalten, die mit der ersten Vorrichtung verbunden sind, wobei gegenwärtige Arbeitsmodi dieser Vorrichtungen nicht dem gegenwärtigen Arbeitsmodus der ersten Vorrichtung entsprechen.

2. Verfahren nach Anspruch 1, wobei der Schritt (S102) des Steuerns einer zweiten Vorrichtung in Verbindung mit der ersten Vorrichtung, um den Arbeitsmodus der zweiten Vorrichtung auf einen Zielmodus umzuschalten, umfasst:
als Reaktion auf ein Erkennen, dass sich die erste Vorrichtung in einem Lautlosmodus befindet, Steuern (S303) der zweiten Vorrichtung, um den Arbeitsmodus der zweiten Vorrichtung auf den Lautlosmodus umzuschalten.

3. Verfahren nach Anspruch 2, wobei der Schritt (S101) des Empfangens von Arbeitsmodusinformationen von der ersten Vorrichtung umfasst:
Empfangen (S301) einer Lautlosmodusanweisung, die von der ersten Vorrichtung gesendet wird, und
als Reaktion auf einen Empfang der Lautlosmodusanweisung, Bestimmen (S302), dass sich die erste Vorrichtung in einem Lautlos-Modus befindet.

4. Verfahren nach einem der Ansprüche 1 bis 3, wobei der Zielmodus der zweiten Vorrichtung der gleiche wie der Arbeitsmodus der ersten Vorrichtung ist.

5. Vorrichtung zur Einstellung eines Arbeitsmodus einer Vorrichtung, wobei die Vorrichtung umfasst:
ein Erkennungsmodul (11), das konfiguriert ist, Arbeitsmodusinformationen von einer ersten Vorrichtung zu empfangen, wobei die Arbeitsmodusinformationen einen Arbeitsmodus der ersten Vorrichtung anzeigen, in dem die erste Vorrichtung gegenwärtig arbeitet, und
ein Steuermodul (12), das konfiguriert ist, eine zweite Vorrichtung in Verbindung mit der ersten Vorrichtung zu steuern, um einen Arbeitsmodus der zweiten Vorrichtung auf einen Zielmodus umzuschalten, wobei der Zielmodus der zweiten Vorrichtung dem Arbeitsmodus der ersten Vorrichtung entspricht, der in den empfangenen Arbeitsmodusinformationen angegeben ist, wobei das Steuermodul umfasst:
ein sendendes Untermodul (121), das konfiguriert ist, Informationen über verbundene Vorrichtungen, die Informationen über Vorrichtungen in Verbindung mit der ersten Vorrichtung umfassen, an die erste Vorrichtung zu senden,
ein Empfangsuntermodul (122), das konfiguriert ist, eine Auswahlanweisung, die von der ersten Vorrichtung gesendet wird, die auf einer Auswahl aus den Informationen verbundener Vorrichtungen basiert, zu empfangen,
ein Steueruntermodul (123), das konfiguriert ist, eine zweite Vorrichtung, die in der Auswahlanweisung angegeben ist, zu steuern, um einen Arbeitsmodus der zweiten Vorrichtung auf den Zielmodus umzuschalten,
wobei die Informationen über verbundene Vorrichtungen Informationen über Vorrichtungen beinhalten, die mit der ersten Vorrichtung verbunden sind, wobei gegenwärtige Arbeitsmodi dieser Vorrichtungen nicht dem gegenwärtigen Arbeitsmodus der ersten Vorrichtung entsprechen.

6. Vorrichtung nach Anspruch 5, wobei das Steuermodul umfasst:
ein Lautlossteueruntermodul (124), das konfiguriert ist, die zweite Vorrichtung als Reaktion darauf zu steuern, dass sich die erste Vorrichtung in einem Lautlosmodus befindet, wie in den empfangenen Arbeitsmodusinformationen angegeben, um den Arbeitsmodus der zweiten Vorrichtung auf einen Lautlosmodus umzuschalten.

7. Vorrichtung nach Anspruch 6, wobei das Erkennungsmodul umfasst:
ein zweites Empfangsuntermodul (111), das konfiguriert ist, eine Lautlosmodusanweisung, die von der ersten Vorrichtung gesendet wird, zu empfangen,
ein Bestimmungsuntermodul (112), das konfiguriert ist, als Reaktion auf ein Empfangen der Lautlosmodusanweisung durch das zweite Empfangsuntermodul zu bestimmen, dass sich die erste Vorrichtung in einem Lautlos-Modus befindet.

8. Vorrichtung nach einem der Ansprüche 5 bis 7, wobei der Zielmodus der zweiten Vorrichtung der gleiche wie der Arbeitsmodus der ersten Vorrichtung ist.

9. System zur Einstellung eines Arbeitsmodus einer zweiten Vorrichtung, wobei das System umfasst:
die Vorrichtung nach Anspruch 5, eine erste Vorrichtung (51) und mehrere Vorrichtungen, die zumindest die zweite Vorrichtung (53) umfassen.

10. System nach Anspruch 9, wobei
die erste Vorrichtung konfiguriert ist:
einen gegenwärtigen Arbeitsmodus zu erkennen,
eine erste Mitteilung an die Vorrichtung zu senden, wobei die erste Mitteilung die Arbeitsmodusinformationen umfasst,
Informationen über verbundene Vorrichtungen auszugeben, die gemäß der ersten Mitteilung erlangt und von der Vorrichtung gesendet werden, wobei die Informationen über verbundene Vorrichtungen die Informationen über die Vorrichtung umfassen, die bereits mit der Vorrichtung verbunden ist,
eine Auswahloperation für die Informationen über verbundene Vorrichtungen zu erkennen, und
als Reaktion auf ein Erkennen der Auswahloperation, eine Auswahlanweisung an die Vorrichtung zu senden, wobei die Auswahlanweisung verwendet wird, um die Vorrichtung anzuweisen, die zweite Vorrichtung, die in der Auswahlanweisung angegeben ist, zu steuern, um einen Arbeitsmodus auf den Zielmodus umzuschalten.

11. Computerprogramm, das Anweisungen umfasst, die, wenn das Programm durch einen Computer ausgeführt wird, den Computer veranlassen, alle der Schritte des Verfahrens nach einem der Ansprüche 1 bis 4 durchzuführen.

## Revendications

1. Procédé pour régler un mode de fonctionnement d'un dispositif, ledit procédé comprenant :
une étape consistant à recevoir (S101) des informations de mode de fonctionnement en provenance d'un premier dispositif, dans lequel les informations de mode de fonctionnement indiquent un mode de fonctionnement du premier dispositif, dans lequel fonctionne actuellement le premier dispositif ; et
une étape consistant à commander (S102) un second dispositif associé au premier dispositif pour commuter un mode de fonctionnement dudit second dispositif vers un mode cible, dans lequel ledit mode cible concorde avec le mode de fonctionnement du premier dispositif, dans lequel l'étape (S102) consistant à commander un second dispositif associé au premier dispositif pour commuter un mode de fonctionnement du second dispositif vers un mode cible comprend :
envoyer (S202), au premier dispositif, des informations de dispositifs associés comprenant des informations de dispositifs associés au premier dispositif ;
recevoir (S203) une instruction de sélection envoyée par le premier dispositif, qui est basée sur une sélection parmi les informations de dispositifs associés ; et
commander (S204) le second dispositif indiqué dans l'instruction de sélection pour commuter un mode de fonctionnement dudit second dispositif vers le mode cible,
dans lequel les informations de dispositifs associés incluent des informations de dispositifs qui sont associés au premier dispositif, dans lequel des modes de fonctionnement actuels de ces dispositifs ne concordent pas avec le mode de fonctionnement actuel du premier dispositif.

2. Procédé selon la revendication 1, dans lequel l'étape (S102) consistant à commander un second dispositif associé au premier dispositif pour commuter le mode de fonctionnement du second dispositif vers un mode cible comprend :
en réponse à la détection de ce que le premier dispositif est en mode silencieux, commander (S303) le second dispositif pour commuter le mode de fonctionnement du second dispositif vers le mode silencieux.

3. Procédé selon la revendication 2, dans lequel l'étape (S101) de réception d'informations de mode de fonctionnement en provenance du premier dispositif comprend :
recevoir (S301) une instruction de mode silencieux envoyée par le premier dispositif ; et
en réponse à une réception de l'instruction de mode silencieux, déterminer (S302) que le premier dispositif est en mode silencieux.

4. Procédé selon l'une quelconque des revendications 1 à 3, dans lequel ledit mode cible dudit second dispositif est le même que le mode de fonctionnement du premier dispositif.

5. Appareil pour régler un mode de fonctionnement de dispositif, ledit appareil comprenant :
un module de détection (11) configuré pour recevoir des informations de mode de fonctionnement en provenance d'un premier dispositif, dans lequel les informations de mode de fonctionnement indiquent un mode de fonctionnement du premier dispositif, dans lequel fonctionne actuellement le premier dispositif ; et
un module de commande (12) configuré pour commander un second dispositif associé au premier dispositif afin de commuter un mode de fonctionnement dudit second dispositif vers un mode cible, dans lequel le mode cible dudit second dispositif concorde avec le mode de fonctionnement du premier dispositif indiqué dans les informations de mode de fonctionnement reçues, dans lequel le module de commande comprend :
un sous-module d'envoi (121) configuré pour envoyer, au premier dispositif, des informations de dispositifs associés comprenant des informations de dispositifs associés au premier dispositif ;
un sous-module de réception (122) configuré pour recevoir une instruction de sélection envoyée par le premier dispositif, qui est basée sur une sélection parmi les informations de dispositifs associés ;
un sous-module de commande (123) configuré pour commander un second dispositif indiqué dans l'instruction de sélection afin de commuter un mode de fonctionnement dudit second dispositif vers le mode cible,
dans lequel les informations de dispositifs associés incluent des informations de dispositifs qui sont associés au premier dispositif, dans lequel des modes de fonctionnement actuels de ces dispositifs ne concordent pas avec le mode de fonctionnement actuel du premier dispositif.

6. Appareil selon la revendication 5, dans lequel le module de commande comprend :
un sous-module de commande de silence (124) configuré pour commander le second dispositif afin de commuter le mode de fonctionnement du second dispositif vers le mode silencieux en réponse au fait que le premier dispositif est en mode silencieux, comme l'indiquent les informations de mode de fonctionnement reçues.

7. Appareil selon la revendication 6, dans lequel le module de détection comprend :
un second sous-module de réception (111) configuré pour recevoir une instruction de mode silencieux envoyée par le premier dispositif ;
un sous-module de détermination (112) configuré pour déterminer que le premier dispositif est en mode silencieux, en réponse à la réception par le second sous-module de réception de l'instruction de mode silencieux.

8. Appareil selon l'une quelconque des revendications 5 à 7, dans lequel ledit mode cible dudit second dispositif est le même que le mode de fonctionnement du premier dispositif.

9. Système pour régler un mode de fonctionnement d'un second dispositif, le système comprenant :
l'appareil selon la revendication 5, un premier dispositif (51), et une pluralité de dispositifs comprenant au moins le second dispositif (53).

10. Système selon la revendication 9, dans lequel :
le premier dispositif est configuré pour :
détecter un mode de fonctionnement actuel ;
envoyer une première notification à l'appareil, dans lequel la première notification comprend les informations de mode de fonctionnement ;
délivrer des informations de dispositifs associés, acquises en fonction de la première notification et envoyées par l'appareil, dans lequel les informations de dispositifs associés comprennent les informations du dispositif déjà associé au dispositif ;
détecter une opération de sélection des informations de dispositifs associés ; et
en réponse à la détection de l'opération de sélection, envoyer une instruction de sélection à l'appareil, dans lequel l'instruction de sélection est utilisée pour donner à l'appareil l'instruction de commander le second dispositif indiqué dans l'instruction de sélection afin de commuter le mode de fonctionnement vers le mode cible.

11. Programme informatique comprenant des instructions qui, lorsque le programme est exécuté par un ordinateur, font effectuer à l'ordinateur toutes les étapes du procédé selon l'une quelconque revendications 1 à 4.
